(19) **Europäisches Patentamt**

**European Patent Office**

**Office européen des brevets**

(11) **EP 0 883 768 B1**

(12) **EUROPEAN PATENT SPECIFICATION**

(45) Date of publication and mention
of the grant of the patent:
**18.09.2002 Bulletin 2002/38**

(51) Int Cl.⁷: **F16L 9/133**

(86) International application number:
**PCT/SE97/00302**

(21) Application number: **97906373.2**

(22) Date of filing: **24.02.1997**

(87) International publication number:
**WO 97/033116 (12.09.1997 Gazette 1997/39)**

(54) **MULTILAYER PIPE**

MEHRSCHICHTIGES ROHR

CONDUITE MULTICOUCHE

(84) Designated Contracting States:
**AT BE CH DE DK ES FI FR GB GR IE IT LI NL PT
SE**

(30) Priority: **04.03.1996 SE 9600826**

(43) Date of publication of application:
**16.12.1998 Bulletin 1998/51**

(73) Proprietor: **BOREALIS A/S
2800 Lyngby (DK)**

(72) Inventors:
 • **EK, Carl-Gustaf
 S-426 72 Västra Frölunda (SE)**
 • **SANDBERG, Hans
 S-440 64 Rönnäng (SE)**
 • **LINDSTRÖM, Helge
 FIN-06650 Hamari (FI)**

(74) Representative: **Wiklund, Erik et al
AWAPATENT AB,
Box 5117
200 71 Malmö (SE)**

(56) References cited:
  EP-A- 0 659 534     WO-A-91/00466
  DE-C- 4 202 397     DE-C- 4 202 399
  GB-A- 2 289 108

**Description**

The present invention relates to a multilayer pipe, and more specifically to a multilayer pressure pipe of plastic with improved resistance to rapid crack propagation.

By pressure pipe is meant a pipe which, when used, is subjected to an internal positive pressure, i.e. the pressure inside the pipe is higher than the pressure outside the pipe.

Nowadays, pipes of polymer material are frequently used for various purposes, such as fluid transport, i.e. transport of liquid or gas, e.g. water or natural gas, during which the fluid can be pressurised. Moreover, the transported fluid may have varying temperatures, usually not outside the temperature range from about -40°C to about 100°C. Such pipes are now preferably made of polyolefin plastic, such as ethylene plastic (HDPE, MDPE), or of polyvinyl chloride (PVC) or alternatively of other materials that are not necessarily based on polymer. Such pipes are disclosed in GB-A-2289108.

A drawback of such pipes at low temperatures is that if they are subjected to stress which initiates a crack, this crack can be spread or propagated very fast a considerable distance in the pipe and make the pipe useless. The speed of propagation of the crack can be as high as about 100-300 m/s in the longitudinal direction of the pipe. This type of cracking is generally called rapid crack propagation (RCP). To make a pressure pipe of plastic material acceptable, it should, at a certain temperature and at a certain inner pressure, not have rapid crack propagation greater than 4 times the pipe diameter in the longitudinal direction of the pipe.

The RCP properties of a given pipe can be determined in various ways. According to one method, called the S4 test (Small Scale Steady State), which has been developed at Imperial College, London, and which is described in ISO DIS 13477, a pipe is tested, which has an axial length not below 7 pipe diameters. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. While the exterior of the pipe is at ambient pressure (atmospheric pressure), the pipe is pressurised internally, and the internal pressure in the pipe is kept constant at a pressure of 0.5 MPa positive pressure. One end of the pipe, the so-called initiating zone, is cooled. A number of discs have been mounted on a shaft inside the pipe to prevent decompression during the tests. A knife projectile is shot, with well-defined forms, towards the pipe close to its one end in the so-called initiating zone in order to produce a rapidly running axial crack. The initiating zone is provided with an abutment for avoiding unnecessary deformation of the pipe. The test equipment is adjusted in such manner that crack initiation takes place in the material involved, and a number of tests are effected at varying temperatures. The axial crack length in the measuring zone, having a total length of 4.5 diameters, is measured for each test and is plotted against the measured temperature. If the crack length exceeds 4 diameters, the crack is assessed to propagate. If the pipe passes the test at a given temperature, the temperature is lowered successively until a temperature is reached, at which the pipe no longer passes the test, but the crack propagation exceeds 4 times the pipe diameter. The critical temperature ($T_{crit}$) is the lowest temperature at which the pipe passes the test. The lower the critical temperature the better, since it results in an extension of the applicability of the pipe. It is desirable for the critical temperature to be around -5°C or lower.

In this context, it should be mentioned that some plastic materials have so poor RCP properties (high $T_{crit}$) that the value of $T_{crit}$ exceeds the normal measuring limit for $T_{crit}$ which is +23°C. In such cases, use is conventionally made, for the purpose of the present invention, of a $T_{crit}$ value of +23°C for these materials when calculating the below described weighted average value of $T_{crit}$.

For bimodal polyethylene plastic intended for pipes that are required to be resistant to RCP, $T_{crit}$ generally is in the range of from about 0°C to about -25°C, whereas $T_{crit}$ for polypropylene plastic is above about +23°C.

Another method of determining the RCP properties for a pressure pipe of plastic is to determine the critical pressure $P_{crit}$ instead. The method conforms with the above described method, but instead of keeping the pressure constant and successively lowering the temperature, the temperature is kept constant at 0°C±2°C and the pressure in the pipe is successively increased. The highest pressure at which the pipe still passes the test, is called the critical pressure, $P_{crit}$. The method for determining $P_{crit}$ is less preferred in connection with the development of materials, since the tested pipe must usually be subjected to such high pressures as 1 MPa or more, which involves risks and difficulties. Therefore the method of determining $T_{crit}$ is preferred and used in the present invention.

It would mean a great advantage if it was possible to provide pressure pipes of plastic material having improved resistance to rapid crack propagation, RCP. It would be particularly advantageous if it was possible to provide pressure pipes of plastic material having a $T_{crit}$ below -5°C, preferably below -15°C.

According to the present invention it has been found that pressure pipes of plastic material with improved resistance to rapid crack propagation can be achieved by making the pipes of several layers of different polyolefin plastic materials.

According to the invention, it is possible, by making a pipe of suitably selected and combined layers of different plastic materials, to accomplish resistance to rapid crack propagation, measured as $T_{crit}$ of the multilayer pipe, which is better than the weighted average value of $T_{crit}$ for single-layer pipes of the individual plastic materials that are included in the multilayer pipe.

According to a specially preferred aspect of the invention, a multilayer pipe of polyolefin plastic is provided, whose resistance to rapid crack propagation, measured as $T_{crit}$, is better than that of a pipe of the same dimension, built up of one of the individual plastic materials included.

The characteristic features of the invention are evident from the accompanying claims.

By "weighted average value", $T_{critV}$ is meant, for a multilayer pipe, which is built up of e.g. the layers A, B and C, the layers constituting for instance $x_A$%, $x_B$% and $x_C$%, respectively, of the weight of the pipe ($x_A + x_B + x_C = 100$%), the $T_{crit}$ value which is obtained if $T_{crit}$ is determined for single-layer pipes of A, B and C, said pipes each having the same dimensions as the multilayer pipe, and subsequently these $T_{crit}$ values are weighted corresponding to that part by weight, by which A, B and C are included in the multilayer pipe and added to each other. The weighted average value for the above-mentioned example will then be $(x_A \cdot T_{critA} + x_B \cdot T_{critB} + x_C \cdot T_{critC})/100$. According to the present invention, $T_{crit}$ of the multilayer pipe ($T_{critTot}$) is lower than the above-mentioned, weighted average value, $T_{critV}$.

For a multilayer pipe according to the invention having n layers, the critical temperature of a given layer being designated $T_{crit\ i}$ and the weight of the layer i being designated $x_i$, the relationship between the critical temperature ($T_{critTot}$) of the multilayer pipe and the weighted average value of the critical temperatures of single-layer pipes of the individual materials included in the multilayer pipe, can be generally defined by the formula

$$T_{critTot} < \frac{\sum_{1}^{n} x_i \cdot T_{crit\ i}}{\sum_{1}^{n} x_i} \quad (\approx T_{critV}) \qquad ,$$

According to a specially preferred aspect of the present invention, a resistance to RCP is provided, measured as $T_{crit}$, which is better than that of each of the materials included, i.e. $T_{critTot}$ of the multilayer pipe according to the invention is lower than the critical temperature ($T_{crit\ i}$) of each of the materials included in the different layers of the multilayer pipe. This condition can be generally expressed by the following relationship:

$$T_{critTot} < T_{crit\ i}$$

wherein i can assume values from 1 to n.

The pressure pipes according to the invention are made of polyolefin plastic, especially polyethylene plastic and polypropylene plastic.

By polyethylene plastic or ethylene plastic is meant a plastic based on polyethylene or on copolymers of ethylene, in which the ethylene monomer constitutes the greatest part of the mass. Polyethylene plastic may thus consist of homopolymers or copolymers of ethylene, in which case the copolymers can be graft copolymers or copolymers of ethylene and one or more other monomers copolymerisable with ethylene. The polyethylene plastic can be of low pressure type (HDPE, MDPE, LLDPE), i.e. produced by using a coordination catalyst at low pressure. A particularly preferred type of polyethylene plastic is so-called bi- or multimodal polyethylene, i.e. polyethylene whose molecular weight distribution curve has two or more peaks or maxima.

Similarly to that discussed above for polyethylene plastic, it is meant by polypropylene plastic or propylene plastic a plastic based on polypropylene or on copolymers of propylene, the propylene monomer constituting the greatest part of the mass. The polypropylene plastic may thus consist of homopolymers or copolymers of propylene, in which case the copolymers can be graft copolymers or copolymers of propylene and one or more other monomers copolymerisable with propylene.

As mentioned above, it has been found in the present invention that the RCP properties are improved if the pipe is made of several layers of different polymers. By the expression "different polymers" is meant polymers with different basic monomers, such as polyethylene plastic versus polypropylene plastic, as well as different qualities of the same basic polymer, which differ sufficiently, for instance in respect of the RCP value, i.e. which have different $T_{crit}$. The difference in $T_{crit}$ should be at least 5°C, preferably at least 10°C.

In its simplest form, the pipe according to the invention comprises two layers of different polymers, such as one layer of polyethylene plastic and one layer of polypropylene plastic. It is preferred, however, that the pipe is built up of more than two polymer layers, such as three or more layers. Most preferred at present is that the pipe according to the invention is built up of three layers, such as an inner layer of polyethylene plastic, an intermediate layer of propylene plastic and an outer layer of polyethylene plastic. The different polymer layers can be juxtaposed or, if desirable, it is possible to arrange a thin intermediate layer between the polymer layers. The contribution of these intermediate layers when calculating the weighted average value of the critical temperatures for the individual layer materials is in many cases so small that it may neglected.

The various layers in the pipe can have the same or different thickness. For instance, the layer or layers of one polymer may have one thickness, whereas the layer or layers of the other polymer may have another, greater or smaller thickness. If there are more layers of one polymer, also these layers can have the same or different thickness.

Furthermore the invention is not restricted to multilayer pipes, which consist of a combination of two different polymer materials. Also combinations of three or more polymer materials are comprised by the invention.

The improved resistance to RCP obtained in the invention can be used in various ways.

According to one aspect, it is possible in pipes of a polymer material having relatively low resistance to RCP (high $T_{crit}$) to improve this resistance at a comparatively low cost by combining the original polymer material with a layer of another polymer material having higher resistance to RCP (lower $T_{crit}$). The two polymer materials may then be present as two or more alternating layers. An embodiment of interest in this context is the using of cheap polymer scrap as one layer and the combining of this with one or more layers of better polymer materials having a lower $T_{crit}$.

When combining polymer materials having different $T_{crit}$, it is preferred according to the invention that the material having a lower $T_{crit}$ is arranged at least on the outside of the pipe.

According to another and especially preferred aspect, resistance to RCP is achieved, which is higher than that of the individual materials included. By combining layers of e.g. polyethylene plastic and polypropylene plastic, it is thus possible according to the invention to provide pipes having resistance to RCP which is better than the resistance of both the included polyethylene plastic and the included polypropylene plastic. This is surprising and confers a special advantage of the invention.

The inventive multilayer pipes are produced in a manner known per se by, for instance, extrusion or injection moulding, preferably by coextrusion. For a more detailed description of such processes, reference is made to, for instance, D. Djordjevic, "Coextrusion", Rapra Review Reports, Vol. 6, No. 2, 1992, pp 51-53.

In order to further facilitate the understanding of the invention, an Example follows below. The Example of the invention is only intended to be illustrative and should not be interpreted as limiting to the invention. In the Example, all parts and percentages relate to weight, unless otherwise stated.


Example 1


Multilayer pipes having an outer diameter of 110 mm and a diameter/wall thickness ratio (SDR) of 11 were extruded by a conventional Cincinnati Milacron CMS 60 pipe extruder having a screw diameter of 60 mm and 2 conventional side extruders having screw diameters of 50 and 30 mm, respectively, all connected to a multilayer tool of conventional design, having the possibility of extruding 1-5 layers of varying thickness of the materials and composition of the layers. The operational adjustments were adapted to the instructions of the respective suppliers of material and the stipulated distribution of layers. Maximum melting temperatures were measured to be between 200 and 240°C. The line speed was about 0.5-1.0 m/min. The pipes were calibrated and cooled by means of conventional downstream equipment supplied by Cincinnati.

After 2 weeks' conditioning, the pipes were tested in an RCP S4-test rig which was originally manufactured at Imperial College, London, but modified to satisfy new requirements according to ISO/DIS 13477 (revision ISO/TC/138/SC4 WG RCP - DOC N048). The tests were carried out according to ISO/DIS 13477 (revision ISO/TC/138/SC4 WG RCP - DOC N048).

The tested combinations of materials and the test results are shown in Tables 1 and 2.

EP 0 883 768 B1

### Table 1

| Material | Type | Designation | Density $(g/m^3)$ | $MFR_2$ at 190° $(g/10\ min)$ | $MFR_5$ at 190° $(g/10\ min)$ | $MFR_{21}$ at 190° $(g/10\ min)$ |
|---|---|---|---|---|---|---|
| A | high density polyethylene for pressure pipe applications | HE 2499[1] | 950 | 0.1 | 0.4 | |
| B | polypropylene homopolymer for discs and plates | HA 101 B[1] | 901 | 0.4(230°C) | 0.4 | 0.4 |
| C | polypropylene block copolymer containing 3.5% by weight ethylene comonomer and intended for industrial applications | RA 130 E[1] | 902 | 0.2(230°C) | 0.4 | |
| D | polybutylene of pipe quality | DP 4137[2] | 930 | 0.4 | | |
| E | 50/50 A/C | | | | | |
| F | high density polyethylene of experimental quality[1] | | 953 | 0.1 | 0.5 | |
| H | high molecular high density polyethylene of blow moulding quality | NCPE 2216[1] | 952 | | | 2 |

1) supplied by Borealis A/S, Denmark

2) supplied by Shell Plastics, England

## Table 2

| Test No. | Combination of materials (outside-inside) | % by weight | $T_{critTot}$ (°C) | $T_{critV}$ (°C) |
|---|---|---|---|---|
| 1 | A-B-A | 34-54-12 | <-25 | +5.5 |
| 2 | A-E-B-E-A | 34-1-54-1-10 | <-25 | +6.0 |
| 3 | A-B-A | 24-58-18 | -33 | +7.0 |
| 4 | " | 18-68-14 | -23 | +11 |
| 5 | " | 13-80-7 | -19 | +15 |
| 6 | A-B | 20-80 | -21 | +15 |
| 7 | " | 29-71 | <-25 | +12 |
| 8 | " | 50-50 | <-25 | +4 |
| 9 | B-A | 67-33 | >+23* | +11 |
| 10 | A-D-A | 35-46-19 | <-30 | -13 |
| 11 | F-B-F-B-F | 29-1-50-2-18 | 8 | +15 |
| 12 | A-F-A | 26-53-21 | -6 | +0.9 |
| 13 | A-H-A | 24-59-17 | <-30 | -21 |
| 14 | " | 19-63-18 | <-30 | -21 |
| 15 | A-B-H-B-A | 19-1-67-1-12 | -30 | -21 |

* the outer layer was split

## Table 2 (cont)

Reference tests

| Test No. | Combination of materials (outside-inside) | % by weight | T<sub>critTot</sub> (°C) |
|---|---|---|---|
| 19 | A | 100 | -15 |
| 20 | A-A-A-A-A | 19-4-55-4-18 | -15 |
| 21 | B | 100 | >+23 |
| 22 | C | 100 | >+23 |
| 23 | D | 100 | -10 |
| 24 | E | 100 | +10 |
| 25 | F | 100 | 15 |
| 26 | F-F-F | 7-86-7 | 14 |
| 27 | " | 14-72-14 | 16 |
| 28 | " | 24-52-24 | 14 |
| 30 | H | 100 | -25 |

When studying the test results, it should be noted that $T_{critTot}$ of the multilayer pipes according to the invention is lower, and in many cases considerably lower than the weighted average value of $T_{crit}$ ($T_{critV}$) of the individual materials included. Thus, $T_{critTot}$ for Tests Nos 1, 2, 3, 7 and 8 is below -25°C although none of the included materials has a $T_{crit}$ lower than -15°C. This must be considered very surprising and means a considerable technical advantage by the applicability of the pipes being increased to a considerable extent.

Moreover, it may be mentioned that materials B and C have very low resistance to RCP and yet, by using them, it is possible to obtain very good results for multilayer pipes.

In this context, Test No. 9, which is a comparative test, should be noted. In this test, the outer layer (material B) was split in the testing and it was hardly possible to carry out any meaningful measurements. For this reason, $T_{critTot}$ has been set at >+23°C, which is higher than $T_{critV}$ (+10°C). This test can be compared with the result of Test No. 7, which contains a still higher content of material B (71%) but all the same has a value of $T_{critTot}$ which is below -25°C. This indicates that it is sometimes also important that the layers of materials are arranged in a certain order and more specifically in such manner that the material having the lowest $T_{crit}$ is arranged at least on the outside of the pipe.

Besides, the results in Table 2 demonstrate that $T_{critTot}$ is lowered at an increasing content of material having a low $T_{crit}$ (see for instance Tests Nos 3-5 and 6-8). Moreover, e.g. Test No. 11 demonstrates, compared with Test No. 28, that also relatively thin intermediate layers of another material can produce a considerable improvement of $T_{crit}$, although the material of the intermediate layers has a poorer $T_{crit}$ than the materials in the other layers.

## Claims

1. A multilayer pipe of plastic of at least two layers of different plastic materials with improved resistance to rapid crack propagation, **characterised in that** the plastic materials consist of polyolefin plastic, and that the pipe has resistance to rapid crack propagation expressed as the critical temperature of the pipe, which is lower than the weighted average value of the critical temperatures of single-layer pipes of the individual plastic materials included in the multilayer pipe and having the same dimension as this, the critical temperatures of the single-layer pipes of the individual plastic materials differing by at least 5°C and the critical temperature of a pipe being the lowest temperature, at which a crack initiated in the pipe propagates a distance in the pipe of at most 4 times the diameter of the pipe at a pressure difference between the inside and outside of the pipe of 0.5 MPa.

2.  A pipe as claimed in claim 1, **characterised in that** the pipe has a critical temperature which is lower than that of all the included plastic materials individually.

3.  A pipe as claimed in claim 1 or 2, **characterised in that** the pipe has a critical temperature below -5°C, preferably below -15°C, measured on a pipe having an outer diameter of 110 mm and a wall thickness of 10 mm.

4.  A pipe as claimed in any one of claims 1-3, **characterised in that** the layers consist of at least one plastic, which is selected from polyethylene plastic and polypropylene plastic.

5.  A pipe as claimed in claim 4, **characterised in that** the layers comprise at least two layers of polyethylene plastic, whose values of $T_{crit}$ differ by at least 10°C.

6.  A pipe as claimed in claim 4 or 5, **characterised in that** the layers comprise at least two layers of polypropylene plastic, whose values of $T_{crit}$ differ by at least 10°C.

7.  A pipe as claimed in any one of the preceding claims, **characterised in that** the plastic material having the lowest $T_{crit}$ is arranged at least on the outside of the pipe.

8.  A pipe as claimed in claim 7, **characterised in that** the pipe comprises at least three layers, and that the material having the lowest $T_{crit}$ is arranged on the outside and inside of the pipe.


**Patentansprüche**

1.  Ein mehrschichtiges Kunststoffrohr aus wenigstens zwei Schichten von verschiedenen Kunststoffmaterialien mit verbesserter Beständigkeit gegen rasche Rissausbreitung, **dadurch gekennzeichnet, dass** die Kunststoffmaterialien aus Polyolefinkunststoff bestehen, und dass das Rohr eine Beständigkeit gegen rasche Rissausbreitung, ausgedrückt als die kritische Temperatur des Rohrs, hat, welche niedriger ist als der gewichtete Mittelwert der kritischen Temperaturen von einschichtigen Rohren aus den einzelnen Kunststoffmaterialien, die in dem mehrschichtigen Rohr enthalten sind und die gleiche Abmessung wie dieses haben, wobei sich die kritischen Temperaturen der einschichtigen Rohre aus den einzelnen Kunststoffmaterialien um wenigstens 5°C unterscheiden, und die kritische Temperatur eines Rohrs die niedrigste Temperatur ist, bei welcher ein in dem Rohr initiierter Riss sich über eine Entfernung in dem Rohr von wenigstens dem 4-fachen des Durchmessers des Rohrs bei einem Druckunterschied zwischen der Innenseite und der Außenseite des Rohrs von 0,5 MPa ausbreitet.

2.  Ein Rohr wie in Anspruch 1 beansprucht, **dadurch gekennzeichnet, dass** das Rohr eine kritische Temperatur hat, die niedriger ist als die von sämtlichen einzeln enthaltenen Kunststoffmaterialien.

3.  Ein Rohr wie in Anspruch 1 oder 2 beansprucht, **dadurch gekennzeichnet, dass** das Rohr eine kritische Temperatur unter -5°C, vorzugsweise unter -15°C, hat, gemessen an einem Rohr mit einem Außendurchmesser von 110 mm und einer Wanddicke von 10 mm.

4.  Ein Rohr wie in einem der Ansprüche 1- 3 beansprucht, **dadurch gekennzeichnet, dass** die Schichten aus wenigstens einem Kunststoff bestehen, der ausgewählt ist aus Polyethylenkunststoff und Polypropylenkunststoff.

5.  Ein Rohr wie in Anspruch 4 beansprucht, **dadurch gekennzeichnet, dass** die Schichten wenigstens zwei Schichten aus Polyethylenkunststoff umfassen, deren Werte von $T_{crit}$ sich um wenigstens 10°C unterscheiden.

6.  Ein Rohr wie in Anspruch 4 oder 5 beansprucht, **dadurch gekennzeichnet, dass** die Schichten wenigstens zwei Schichten aus Polypropylenkunststoff umfassen, deren Werte von $T_{crit}$ sich um wenigstens 10°C unterscheiden.

7.  Ein Rohr wie in einem der vorhergehenden Ansprüche beansprucht, **dadurch gekennzeichnet, dass** das Kunststoffmaterial mit der niedrigsten $T_{crit}$ wenigstens auf der Außenseite des Rohrs angeordnet ist.

8.  Ein Rohr wie in Anspruch 7 beansprucht, **dadurch gekennzeichnet, dass** das Rohr wenigstens drei Schichten umfasst, und dass das Material mit der niedrigsten $T_{crit}$ auf der Außenseite und der Innenseite des Rohrs angeordnet ist.

**Revendications**

1.  Tube en matière plastique multicouches comprenant au moins deux couches de matières plastiques différentes avec une résistance améliorée vis-à-vis de la propagation rapide de craquelures, **caractérisé en ce que** les matières plastiques sont constituées de polyoléfines, et **en ce que** le tube a une résistance vis-à-vis de la propagation rapide de craquelures, exprimée comme température critique du tube, qui est inférieure à la valeur moyenne pondérée des températures critiques de tubes monocouches constitués des matières plastiques individuelles incluses dans le tube multicouche et ayant la même dimension que celui-ci, les températures critiques des tubes monocouches constitués des matières plastiques individuelles étant différentes d'au moins 5°C, et la température critique d'un tube étant la température la plus basse à laquelle une craquelure amorcée dans le tube se propage sur une distance dans le tube d'au plus quatre fois le diamètre du tube, sous une différence de pression entre l'intérieur et l'extérieur du tube de 0,5 MPa.

2.  Tube selon la revendication 1, **caractérisé en ce que** le tube a une température critique qui est inférieure à celles de toutes les matières plastiques incluses individuellement.

3.  Tube selon l'une ou l'autre des revendications 1 et 2, **caractérisé en ce que** le tube a une température critique au-dessous de - 5°C, de préférence au-dessous de - 15°C, mesurée sur un tube ayant un diamètre extérieur de 110 mm et une épaisseur de paroi de 10 mm.

4.  Tube selon l'une quelconque des revendications 1 à 3, **caractérisé en ce que** les couches sont constituées d'au moins une matière plastique choisie parmi le polyéthylène et le polypropylène.

5.  Tube selon la revendication 4, **caractérisé en ce que** les couches comprennent au moins deux couches de polyéthylène, dont les températures critiques Tcrit ont des valeurs qui diffèrent d'au moins 10°C.

6.  Tube selon l'une ou l'autre des revendications 4 et 5, **caractérisé en ce que** les couches comprennent au moins deux couches de polypropylène dont les températures critiques Tcrit ont des valeurs qui diffèrent d'au moins 10°C.

7.  Tube selon l'une quelconque des revendications précédentes, **caractérisé en ce que** la matière plastique ayant la température critique Tcrit la plus basse est agencée au moins sur l'extérieur du tube.

8.  Tube selon la revendication 7, **caractérisé en ce que** le tube comprend au moins trois couches, et **en ce que** la matière ayant la température critique Tcrit la plus basse est agencée sur l'extérieur et sur l'intérieur du tube.